# EUROPÄISCHE PATENTSCHRIFT

(11) **EP 2 499 988 B1**
(45) Veröffentlichungstag und Bekanntmachung des Hinweises auf die Patenterteilung: **06.03.2019**
(21) Anmeldenummer: 12158002.1
(22) Anmeldetag: 05.03.2012
(51) Int. Cl.: A61C 3/025, B24C 7/00, A61C 17/02

(54) **Dosiervorrichtung**
Metering device
Dispositif de dosage

(30) Priorität: 18.03.2011 DE 102011005816
(43) Veröffentlichungstag der Anmeldung: 19.09.2012
(73) Patentinhaber: Ferton Holding SA, 2800 Delémont (CH)
(72) Erfinder: Dauphin, Julien, 1125 Monnaz (CH); Olmo, Olivier, 1110 Morges (CH)
(74) Vertreter: Müller Schupfner & Partner Patent- und Rechtsanwaltspartnerschaft mbB

(56) Entgegenhaltungen:
- EP-A2- 1 243 226
- WO-A1-2009/148907
- CH-A- 365 021
- DE-A1- 3 236 552
- DE-A1-102008 053 917
- US-A- 3 244 332

## Beschreibung

Die vorliegende Erfindung betrifft eine Dosiervorrichtung insbesondere für Dentalreinigungspulver gemäß dem Oberbegriff des Anspruchs 1.

Zur professionellen Reinigung im Dentalbereich wird in zunehmendem Maße auf Pulverstrahlgeräte zurückgegriffen, welche ein Luftstrom - Dentalreinigungspulver - Gemisch erzeugen. Bisher wird die Befüllung eines solchen Pulverstrahlgerätes mit Dentalreinigungspulver ohne weitere Hilfsmittel durchgeführt. Meist wird das in Flaschen oder Beuteln angebotene Dentalreinigungspulver direkt aus der Verpackung in den zu befüllenden Behälter des Pulverstrahlgerätes eingefüllt. Ein sich dabei ergebender Nachteil ist zum Beispiel, dass durch eine Staubentwicklung der Blick auf den aktuellen Füllstand und/oder eventuell vorhandene Füllstandsmarkierungen im zu befüllenden Behälter behindert wird und eine richtige Dosierung deutlich erschwert ist. Weiterhin kann das einzufüllende Dentalreinigungspulver bei Überfüllung des zu befüllenden Behälters oder auch bei Staubentwicklung entweichen und darüber hinaus in Kontakt mit der Umgebung gelangen und verunreinigt werden.

Die DE 32 36 552 A1 offenbart einen Pump-Dosierverschluss. Der zum Aufsetzten auf die Öffnung eines Produktbehälters vorgesehene Pump-Dosierverschluss soll gleichermaßen bei allen fließfähigen Produkten einsetzbar, eine gleichbleibende Restentleerung der Dosierkammer ermöglichen, eine Dosiermengenkontrolle erlauben und vollautomatisch zu montieren sein. Erfindungsgemäß wird eine im Wesentlichen aus dem Inneren eines Federbalgs bestehende Dosierkammer mit Einlassöffnung und Auslassöffnung an den Längsenden vorgesehen.

Die DE 10 2008 053 917 A1 offenbart eine Aufträgervorrichtung zur dosierten Abgabe eines Stoffes, insbesondere einer Flüssigkeit oder einer Paste, mit einem Grundkörper, der Verbindungsmittel zum Fixieren der Aufträgervorrichtung an einem den Stoff aufnehmenden Behälter aufweist, wobei die Aufträgervorrichtung behälterseitig eine Einsatzöffnung aufweist, durch die der Stoff aus dem Behälter in die Aufträgervorrichtung gelangen kann, wobei die Aufträgervorrichtung eine Abgabeöffnung aufweist, um den Stoff abzugeben, wobei die Abgabeöffnung und die Einsatzöffnung durch einen Verbindungskanal verbunden sind, und mit einem dem Verbindungskanal zugeordneten Dosierventil, um die Abgabe des Stoffes zu steuern, wobei das Dosierventil einen Ventilkörper und einen Ventilsitz aufweist, welche zusammenwirken und einen Dichtbereich bilden.

Die CH 365021 offenbart einen Behälter, insbesondere eine Tube oder Flasche, insbesondere aus Kunststoff. Der Behälter soll derart ausgebildet sein, dass sein Verschluss rasch und nur mit einer Hand geöffnet werden kann. Nach Entnahme von Füllgut soll sich der Verschluss mit Sicherheit von selbst wieder schließen können und dabei das Innere des Behälters nach außen einwandfrei abdichten.

Die US 3,244,332 offenbart eine sich selbst schließende Kappe eines Behälters bzw. einer Flasche. Insbesondere ist die US 3,244,332 auf eine Kappe gerichtet, welche nach dem Druck-Prinzip arbeitet und sich nach dem Loslassen selbst schließt.

Die EP 1 243 226 A2 offenbart einen Pulverbehälter für ein dentales Abrasivstrahlgerät, der mit einem Auslassventil versehen ist, dessen Schließkörper durch eine mit ihm antriebsmäßig verbundene Antriebseinrichtung in eine getaktete Bewegung zwischen einer Schließstellung und einer Auslassöffnung des Pulverbehälters und einer Öffnungsstellung bewegbar ist, in welcher eine durch die Taktfolge bestimmte Dosiermenge des in dem Behälter bevorrateten Pulvers innerhalb einer Mischkammer einem gasförmigen Trägermedium beigemischt wird, welches das Gemisch über eine Anschlussleitung der Mischkammer einem bei einer Zahnbehandlung verwendeten Handstück zuleitet.

Die WO 2009/148907 A1 offenbart ein Pulverstrahlgerät mit einem Düsenkopf, welcher einen ersten und einen zweiten Fluidpfad umfasst, der erste Fluidpfad ist ausgelegt, zum zur Verfügung stellen eines Pulver-/Fluidgemisches zu einer ersten Düse. Der zweite Fluid-Pfad ist ausgelegt zum zur Verfügung stellen einer Flüssigkeit zu einer zweiten Düse.

Aufgabe der vorliegenden Erfindung ist es also, eine Dosierungsvorrichtung bereitzustellen, die es ermöglicht, ein Dentalreinigungsgerät mit Dentalreinigungspulver zu befüllen und dabei zu vermeiden, dass das Pulver mit der Umgebung in Kontakt gelangt oder entweichen kann. Diese Aufgabe wird gelöst mit einer Dosiervorrichtung gemäß den Merkmalen des Anspruchs 1. Bevorzugte Ausführungsformen ergeben sich aus den abhängigen Ansprüchen.

Erfindungsgemäß umfasst die Dosiervorrichtung insbesondere die Dosiervorrichtung für Dentalreinigungspulver, eine Aufnahmeeinheit und eine Verschlusseinheit, wobei die Aufnahmeeinheit einen Durchtrittskanal mit einer Anschlaggeometrie aufweist, wobei die Verschlusseinheit ein Verschlusselement aufweist, welches verlagerbar im bzw. zum Durchflusskanal angeordnet ist, wobei in einem ersten Betriebszustand das Verschlusselement mittels einer Vorspannung gegen die Anschlaggeometrie gepresst ist, und auf diese Weise der Durchtrittskanal verschlossen ist, wobei über Anlegen einer Kraft, die größer als die Vorspannung und dieser entgegengerichtet ist, das Verschlusselement in einen zweiten Betriebszustand bringbar ist. Der zweite Betriebszustand ist hierbei durch das Abheben des Verschlusselementes von der Anschlaggeometrie und die damit folgende Freigabe des Durchtrittskanals gekennzeichnet. Die Dosiervorrichtung besteht im Wesentlichen aus den zwei Baugruppen Verschlusseinheit und Aufnahmeeinheit, wobei ein weiteres wichtiges Merkmal der Durchtrittskanal ist, welcher innerhalb der Aufnahmeeinheit angeordnet ist. Dieser Durchtrittskanal dient dazu, ein pulverförmiges Befüllmedium, insbesondere ein Dentalreinigungspulver, von einem Vorratsbehälter hin zu einem zu befüllenden Behälter zu leiten. Zu diesem Zweck verfügt der Durchtrittskanal über zwei Enden, von denen das erste angrenzend an den Vorratsbehälter angeordnet ist und das zweite angrenzend an den zu befüllenden Behälter angeordnet ist. Der Befüllvorgang selbst wird dabei bevorzugt von der Schwerkraft, welche auf das Dentalreinigungspulver wirkt, ausgelöst. Es ist daher zweckmäßig, den Durchtrittskanal während des Befüllvorgangs in vertikal, bzw. längs der Schwerkraftrichtung, auszurichten. Bevorzugt weist der Durchtrittskanal eine Reihe von Querschnittserweiterungen und Querschnittsverengungen auf, die dazu dienen sollen, dass besonders günstige Leiten des pulverförmigen Befüllmediums vom Vorratsbehälter hin zum zu befüllenden Behälter zu ermöglichen. So ist es zweckmäßig, dass zum ersten Ende des Durchtrittskanals hin eine trichterförmige Geometrie vorgesehen ist, die mit ihrer größeren Durchtrittsfläche bzw. Querschnittsfläche hin zum Vorratsbehälter angeordnet ist. Der Durchtrittskanal weist eine Anschlagsgeometrie auf, wobei die Anschlagsgeometrie eine Querschnittsverengung des Durchtrittskanals ist. Die Querschnittsverengung ist bevorzugt als trichterförmige bzw. kegelförmige Geometrie ausgeführt, wobei es weiterhin vorteilhaft sein kann, eine halbkugelförmige oder sprung- oder stufenartige Querschnittsverengung vorzusehen. Des Weiteren ist im Durchtrittskanal ein Verschlusselement angeordnet, wobei dieses Verschlusselement verlagerbar relativ zum Durchtrittskanal, insbesondere zur Anschlaggeometrie, ist. Durch eine Verlagerung des Verschlusselements relativ zu insbesondere der Anschlaggeometrie des Durchtrittskanals, können zwei Betriebszustände eingestellt werden: Der erste Betriebszustand ist dadurch gekennzeichnet, dass das Verschlusselement mit einer bestimmten Kraft gegen die Anschlagsgeometrie gepresst wird, und der Durchtrittskanal auf diese Weise gegen Durchtreten von Befüllmedium verschlossen ist. Der zweite Betriebszustand ist dadurch gekennzeichnet, dass das Verschlusselement von der Anschlaggeometrie abgehoben bzw. beanstandet zu dieser ist und zwischen Verschlusselement und Anschlaggeometrie ein Spalt, bzw. ein vom Befüllmedium zu durchströmender Kanal, entsteht und somit Befüllmedium bzw. Dentalreinigungspulver von einer Seite des Durchtrittskanals hin zur zweiten Seite des Durchtrittskanals gelangen kann. Die Funktionsweise der Kombination aus Verschlusselement und Durchtrittskanals ist also vergleichbar mit der Funktionsweise eines Ventils für strömende Flüssigkeiten. Um im ersten Betriebszustand eine ausreichende Dichtheit des Durchtrittskanals gegen Durchtreten von pulverförmigem Befüllmedium zu gewährleisten, muss das Verschlusselement mit einer bestimmten Kraft gegen die Anschlaggeometrie gepresst werden. Dabei ist es zweckmäßig, diese Kraft mittels einer Vorspannung bereit zu stellen, also mittels Verwendung eines elastisch verformbaren Materials im verformten Zustand und unter Nutzung der bei der elastischen Verformung resultierenden, rückstellenden Kraft dieses Materials. Die ausreichende Dichtheit des Durchtrittskanals ist dadurch definiert, dass kein oder ein nur vernachlässigbar geringer Teil des Dentalreinigungspulvers durch den Durchtrittskanal gelangen kann. Weiterhin ist bevorzugt, dass die Dichtheit der Kontaktstelle zwischen Verschlusselement und Anschlaggeometrie ausreichend ist, um ein Durchtreten von Fremdstoffen oder Schadstoffen aus der Umwelt in den Vorratsbehälter zu verhindern. Es ist daher zweckmäßig, die Geometrie des Verschlusselementes und der Anschlagsgeometrie kongruent zueinander zu gestalten, sodass die Berührfläche zwischen beiden Elementen durchgehend ist. Dabei ist es vor allem bevorzugt, Oberflächenunebenheiten an Verschlusselement und Anschlagsgeometrie zu vermeiden. Bevorzugt kann die Kontaktfläche zwischen Verschlusselement und Anschlaggeometrie möglichst klein gehalten werden, um ein Verklemmen von Pulverresten zu vermeiden, welches bei einer großen Kontaktfläche wahrscheinlicher eintreten würde. Zum Einstellen des zweiten Betriebszustandes, welcher durch eine Beabstandung des Verschlusselements von der Anschlaggeometrie gekennzeichnet ist, muss folglich eine zweite der Vorspannung entgegen gerichtete Kraft an das Verschlusselement übertragen werden. Diese Kraft kann bevorzugt mittelbar oder unmittelbar auf das Verschlusselement aufgebracht werden und muss mindestens so groß wie die aus der Vorspannung resultierende Kraft sein.

Die Verschlusseinheit umfasst ein Stützelement, wobei das Verschlusselement an dem Stützelement festgelegt oder festlegbar ist und wobei das Stützelement relativ zur Aufnahmeeinheitt verlagerbar ist. Durch Festlegen des Verschlusselementes am Stützelement mittels zum Beispiel einer form-, stoff- und/oder kraftschlüssigen Verbindung kann eine Kraft vom Stützelement an das Verschlusselement bzw. vom Verschlusselement an das Stützelement übertragen werden. Eine solche Kraft kann beispielsweise die aus der Vorspannung resultierende Kraft sein, welche das Verschlusselement gegen die Anschlagsgeometrie presst. Es ist bevorzugt, dass das Stützelement an der Seite des Verschlusselementes festgelegt ist, an welcher ebenfalls die Anschlagsgeometrie am Verschlusselement anliegt. Es kann auf diese Weise durch Übertragung einer Zugkraft vom Stützelement an das Verschlusselement dieses gegen die Anschlagsgeometrie gepresst werden. In einer weiterhin bevorzugten Ausführungsform sind das Stützelement und das Verschlusselement einstückig ausgeführt, zum Beispiel als einstückig gegossenes Bauteil. In weiteren bevorzugten Ausführungsformen kann das Verschlusselement auch auf das Stützelement aufgeschraubt, angeklebt oder angeclipst sein.

Außerdem umfasst die Dosiervorrichtung ein Adapterelement, welches an dem Stützelement festgelegt bzw. festlegbar ist, wobei ein erstes Ende des Adapterelementes eine mit der Außengeometrie des Stützelementes kongruierende Geometrie aufweist, und wobei ein, dem ersten Ende entlang der Haupterstreckungsrichtung gegenüberliegendes, zweites Ende eine Geometrie kongruent zur Geometrie eines an das Adapterelement anzulagernden Behälters aufweist. Bevorzugt überbrückt das Adapterelement den Bereich zwischen dem, dem zu befüllenden Behälter zugewandten Ende des Stützelementes und dem zu befüllenden Behälter. Bevorzugt ermöglicht das Adapterelement eine Querschnittserweiterung vom kleineren Querschnitt am Stützelement bis hin zum größeren Querschnitt an der Kontaktfläche des zu befüllenden Behälters zum Adapterelement. Bevorzugt ist das Adapterelement trichterförmig oder es besitzt einen glockenförmigen, halbkugelförmigen und/oder kegelförmigen Querschnitt. Vorteilhafterweise sind am Adapterelement Geometrien wie zum Beispiel Stufen, Absätze oder Anfasungen vorgesehen, die ein besonders günstiges Aufsetzen und Fixieren des Adapterelementes an dem zu befüllenden Behälter ermöglichen. Weiterhin bevorzugt weist das Adapterelement an seiner zum Stützelement weisenden Seite Geometrien auf, die eine Kraftübertragung vom Adapterelement auf das Stützelement ermöglichen. Auf diese Weise kann eine Kraft an dem zu befüllenden Behälter angelegt an das Adapterelement, das Stützelement und schließlich an das Rückstellelement übertragen werden, wodurch das Adapterelement, das Stützelement und das Verschlusselement sich relativ zur Aufnahmeeinheit und dem an dieser festgelegten Vorratsbehälter bewegen. Der Anwender der Dosiervorrichtung kann auf diese Weise mit einer Hand an den zu befüllenden Behälter fassen, mit der anderen Hand an das Vorratsgefäß beide gegeneinander pressen und auf diese Weise innerhalb der Dosiervorrichtung das Verschlusselement gegenüber der Anschlaggeometrie verlagern, wobei der Durchtrittskanal freigeben wird und das Durchtreten von Dentalreinigungspulver aus Vorratsbehälter hin zum zu befüllenden Behälter stattfinden kann. Vorteilhaft ist das Adapterelement aus einem Kunststoff, bevorzugt aus einem lichtdurchlässigen Kunststoff hergestellt. Mittels dieses lichtdurchlässigen bzw. transparenten Adapterelements kann der Anwender der Dosiervorrichtung, während der Befüllvorgang stattfindet, beobachten und kontrollieren, ob das Dentalreinigungspulver ordnungsgemäß in den zu befüllenden Behälter gelangt. Weiterhin ist es bevorzugt, dass das Stützelement um eine definierte Wegstrecke in das Adapterelement hineinragt. Bevorzugt kann die Füllhöhe des zu befüllenden Behälters dadurch eingestellt werden, dass für die Weglänge mit der das Stützelement in das Adapterelement hineinragt bzw. durch dieses hindurch ragt, auf ein bestimmtes Maß eingestellt wird. Es hat sich gezeigt, dass der Befüllvorgang des zu befüllenden Behälters nur solange stattfindet, bis das im zu befüllenden Behälter aufgehäufte Pulver die Unterkante des Stützelementes erreicht, da ab diesem Moment das Pulver nicht mehr seitlich des Stützelements entweichen kann und folglich der Befüllvorgang zum Erliegen kommt. Indem also eine bestimmte Position der Unterkante des Stützelementes im zu befüllenden Behälter eingestellt wird, kann eine bestimmte Höhe des Füllstandes an Dentalreinigungspulver im zu befüllenden Behälter voreingestellt werden. Zu diesem Zwecke kann es vorteilhaft sein, am Stützelement und am Adapterelement jeweils miteinander korrespondierende Gewinde vorzusehen, wobei die Position der Unterkante des Stützelementes relativ zum Adapterelement durch Verdrehen der beiden Elemente gegeneinander und der daraus, dem Gewinde entsprechend, folgenden Verschiebung des Stützelements gegenüber dem Adapterelements in Haupterstreckungsrichtung eingestellt werden kann. Bevorzugt kann der Anwender der Dosiervorrichtung auf diese Weise die Füllhöhe im zu befüllenden Behälter und damit die Menge des in den Behälter einzufüllenden Pulvers vor jedem Befüllvorgang entsprechend anpassen. Weiterhin kann es bevorzugt sein, verschiedene Adapterelemente für ein und dasselbe Stützelement bereitzustellen und so zu ermöglichen, dass die Dosiervorrichtung auf eine Vielzahl zu befüllender Behälter unterschiedlicher Größe aufgesetzt werden kann. In einer weiteren bevorzugten Ausführungsform können das Stützelement und das Adapterelement einstückig ausgeführt sein.

In einer bevorzugten Ausführungsform weist die Verschlusseinheit ein Rückstellelement auf, wobei sich das Rückstellelement an der Aufnahmeeinheit und dem Stützelement unter Vorspannung abstützt, wobei die aus der Vorspannung resultierende Kraft von dem Stützelement auf das Verschlusselement übertragen wird und wobei die Vorspannung zweckmäßigerweise entlang der Haupterstreckungsrichtung des Durchtrittskanals gerichtet ist. Das Rückstellelement besteht bevorzugt aus rückstellfähigem bzw. elastischem Material und ist im elastisch verformten Zustand zwischen Aufnahmeeinheit und Stützelement verbaut. Durch die Bestrebung des Materials des Rückstellelements, wieder in den spannungslosen Zustand, also die Ruhelage, zurückzustreben, setzt das Rückstellelement eine Kraft frei, welche auch als Federkraft bezeichnet werden kann. Diese Kraft überträgt es sowohl an das Stützelement als auch an die Aufnahmeeinheit, wobei das Stützelement die Kraft an das Verschlusselement weiterleitet. Die elastische Verformung und die aus dieser resultierenden Kraft des Rückstellelements wirken bevorzugt in der Haupterstreckungsrichtung des Durchtrittkanals. Als die Haupterstreckungsrichtung des Durchtrittkanals soll die Richtung definiert sein, die bevorzugt vom ersten Ende des Durchtrittkanals, welches an den Vorratsbehälter grenzt, hin zum zweiten Ende des Durchtrittkanals, welches an das zu befüllende Behältnis grenzt, weist. An einer ersten Seite des Stützelementes setzt erfindungsgemäß das Verschlusselement an. Am gegenüberliegenden Ende des Stützelementes weist es bevorzugt eine sprungartige Querschnittserweiterung auf, an welcher wiederum das Rückstellelement angreifen kann. Bevorzugt sind an der Unterseite bzw. dem zweiten Ende des Stützelementes Aussparungen vorgesehen, durch welche das durch den Durchtrittskanal rieselnde Pulver bis hin in den zu befüllenden Behälter gelangen kann. Wird das Stützelement in der Haupterstreckungsrichtung mit einer Kraft beaufschlagt, so überträgt es diese an das Verschlusselement und presst dieses gegen die Anschlaggeometrie. Bevorzugt ist das Rückstellelement eine Spiralfeder aus beispielsweise Federstahl. Von Vorteil kann es ferner sein, das Rückstellelement aus einem hülsenförmig geformtem Elastomer, wie beispielsweise vulkanisiertem Kautschuk oder einem Siloxan, herzustellen.

In einer weiteren bevorzugten Ausführungsform ist durch Anlegen einer Kraft an das Stützelement, die größer als die Vorspannkraft des Rückstellelementes und dieser entgegengerichtet ist, der zweite Betriebszustand der Dosiervorrichtung einstellbar, indem das Stützelement und das Verschlusselement entlang der Haupterstreckungsrichtung verlagert werden. Greift also eine zweite Kraft, die der Vorspannkraft des Rückstellelementes entgegengerichtet und mindestens genauso groß wie diese ist, an das Stützelement an, so kann dieses gemeinsam mit dem Verschlusselement entlang der Haupterstreckungsrichtung verlagert werden. Bei dieser Bewegung hebt das Verschlusselement von der Anschlaggeometrie ab, und wird von dieser beabstandet, sodass zwischen Verschlusselement und Anschlagsgeometrie ein Spalt entsteht, durch welchen das Dentalreinigungspulver gelangen kann. Damit dieser Spalt geöffnet bleibt, muss auch die der Vorspannkraft entgegen gerichtete Kraft aufrechterhalten werden. Sobald diese Kraft nicht mehr anliegt, werden Stützelement und Verschlusselement von der Rückstellkraft des Rückstellelementes wieder in die Position des ersten Betriebszustands verlagert und der Spalt zwischen Verschlusselement und Anschlaggeometrie verschließt sich.

In einer bevorzugten Ausführungsform werden vom ersten Betriebszustand ausgehend zum Erreichen des zweiten Betriebszustandes das Stützelement und das Verschlusselement um einen Millimeter bis zwanzig Millimeter, bevorzugt zwei Millimeter bis zehn Millimeter und besonders bevorzugt vier Millimeter bis sechs Millimeter relativ zur Aufnahmeeinheit verlagert. Die Wegstrecke, um welche Stützelement und Verschlusselement gegenüber der Aufnahmeeinheit, bzw. der Anschlaggeometrie, verlagert werden, hat entscheidenden Einfluss auf die Querschnittsfläche des entstehenden Spaltes zwischen Verschlusselement und Anschlaggeometrie. Je weiter das Verschlusselement von der Anschlagsgeometrie abgehoben wird, desto größer ist der entstehende Spalt. Die Weglänge der Verlagerung ist dabei lediglich durch eine bevorzugte kompakte Bauweise der gesamten Dosiervorrichtung begrenzt und es hat sich gezeigt, dass besonders ein Bereich von zwei bis zehn Millimeter bzw. besonders ein Bereich von vier bis sechs Millimetern als Weglänge der Verlagerung des Verschlusselements relativ zur Anschlaggeometrie günstige Ergebnisse zeigt.

Es ist von Vorteil, wenn das Verschlusselement an der Kontaktfläche zur Anschlagsgeometrie ein Dichtungselement aufweist. Dieses Dichtungselement kann bevorzugt ein O - Ring aus Naturkautschuk oder ähnlichem, elastisch leicht verformbaren Material sein und in einer dafür am Verschlusselement vorgesehenen umlaufenden Nut formschlüssig anliegen. Das Dichtungselement erhöht die Dichtheit der Kontaktfläche zwischen Verschlusselement und Anschlagsgeometrie bei gleichzeitig relativ geringer notwendiger Anpresskraft, die vom Rückstellelement aufgebracht werden muss. Besonders von Vorteil ist dies, wenn die Dosiervorrichtung als Verschluss an dem Vorratsbehälter verbleiben soll und das Eindringen von Fremdkörpern, insbesondere von Luftfeuchtigkeit oder Schadstoffen aus der Luft, in den Vorratsbehälter verhindert werden soll. Bevorzugt kann es auch sein, ein Dichtungselement sowohl am Verschlusselement und/oder an der Anschlagsgeometrie vorzusehen.

In einer bevorzugten Ausführungsform weist die Aufnahmeeinheit einen Aufnahmebereich auf, wobei im Aufnahmebereich ein Innen- und/oder Außengewinde vorgesehen ist. Der Aufnahmebereich dient bevorzugt dazu, einen Vorratsbehälter an der Dosiervorrichtung festlegen zu können. Zu diesem Zweck verfügt er bevorzugt über ein Gewinde, welches je nachdem, welche Form von Anschluss an dem Vorratsbehälter vorgesehen ist, über ein Innen- oder ein Außengewinde. Bevorzugt, um ein und dieselbe Dosiervorrichtung an einer Vielzahl verschiedenartig ausgebildeter Vorratsbehälter festlegen zu können, kann sowohl ein Innen- als auch ein Außengewinde sowie eine mehrstufige mit verschiedenen Gewindedurchmessern ausgestattete Variante des Aufnahmebereiches vorgesehen sein. Dabei sollte das verwendete Gewinde bevorzugt dicht genug sein, um eine ausreichende Dichtheit gegen Heraustreten von Dentalreinigungspulver oder ähnlichem pulverförmigen Materialien gewährleisten zu können. Weiterhin soll bevorzugt ein Durchtreten von Flüssigkeit oder sonstigen Schadstoffen durch den Gewindebereich, hinein in den Vorratsbehälter verhindert werden.

Bevorzugt weist das Adapterelement einen Auflageabsatz, zum Anordnen des Adapterelementes an einem zu befüllenden Behälter, auf, wobei das Stützelement in das Adapterelement hinein ragt und/oder über den Auflageabsatz hinaus ragt. Der Auflageabsatz kann dabei bevorzugt an der Oberkante eines zu befüllenden Behälters zur Auflage gebracht werden. Bevorzugt kann durch Einstellen des Maßes um welches das Stützelement in das Adapterelement hinein und/oder über den Auflageabsatz nach unten hin heraus ragt, die Höhe des im zu befüllenden Behälter aufgehäuften Berges variiert werden. Mit anderen Worten gesagt, kann durch Einstellen des Maßes, mit welchem das Rückstellelement über den Auflageabsatz in Richtung des zu befüllenden Behälters hinaus ragt, der Abstand des im zu befüllenden Behälter aufgehäuften Berges von der Oberkante des zu befüllenden Behälters eingestellt werden.

In bevorzugter Weise sind die Aufnahmeeinheit, das Verschlusselement, das Stützelement und das Adapterelement zumindest bereichsweise rotationssymmetrisch um die Haupterstreckungsrichtung ausgebildet. Diese rotationssymmetrische Ausführungsform mit der Haupterstreckungsrichtung als Rotationsachse vereinfacht bevorzugt die Herstellung der Dosiervorrichtung und ermöglicht es weiterhin, Innen- bzw. Außengewinde zu verwenden, deren Steigung entlang der Haupterstreckungsrichtung verläuft. Da sowohl die Anschlussgeometrie des Vorratsbehälters als auch die Anschlussgeometrie des zu befüllenden Behälters zumeist kreisrund bzw. rotationssymmetrisch ausgebildet sind, ist die Dosiervorrichtung mit bevorzugt rotationssymmetrischen und besonders bevorzugt kreisrunden Anschlussgeometrien ausgestattet. Es kann weiterhin auch bevorzugt sein, die Dosiervorrichtung mit rechteckigen oder vieleckigen Anschlussgeometrien zum Vorratsbehälter bzw. zum zu befüllenden Behälter hin auszustatten. Besonders das Adapterelement kann dabei eine zum Stützelement hin rotationssymmetrische Geometrie aufweisen und an seinem gegenüberliegenden Ende eine rechteckige Geometrie, kongruierend zu einer rechteckigen Geometrie am zu befüllenden Behälter, besitzen.

In einer bevorzugten Ausführungsform weist das Stützelement in einem Bereich mit Erstreckung im Wesentlichen längs der Haupterstreckungsachse einen stegartig ausgebildeten Querschnitt auf. Da sich das Stützelement im Durchtrittskanal befindet, ist es vorteilhaft, wenn zwischen Stützelement und Durchtrittskanal ein möglichst großer Bereich bzw. eine möglichst große Querschnittsfläche frei bleibt, durch die das Dentalreinigungspulver hindurch gelangen kann. Zu diesem Zweck ist es vorteilhaft, wenn das Stützelement über einen Querschnitt mit stegartig ausgebildeter Geometrie verfügt. So kann das Stützelement in einem Abschnitt, der sich im Wesentlichen im Durchtrittskanal befindet, bevorzugt aus zwei, sich in ihrer Mitte jeweils kreuzenden Stegen, deren Steglänge kleiner als das Innenmaß des Durchtrittskanals ist, aufgebaut sein.

Weitere Vorteile und Merkmale ergeben sich aus der nachfolgenden beispielhaften Beschreibung einer bevorzugten Ausführungsform der erfindungsgemäßen Dosiervorrichtung mit Bezug auf die beigefügten Figuren. Unterschiedliche Merkmale verschiedener Ausführungsbeispiele können im Rahmen der in den Ansprüchen 1-9 definierten Erfindung miteinander kombiniert werden. Es zeigen:

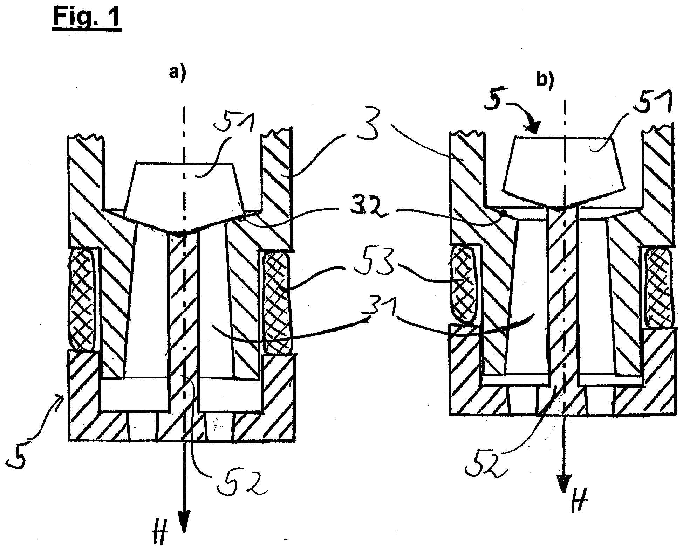

- Fig. 1 a): eine Schnittansicht einer ersten bevorzugten Ausführungsform der erfindungsgemäßen Dosiervorrichtung im ersten Betriebszustand,
- Fig. 1 b): eine Schnittansicht derselben bevorzugten Ausführungsform der Dosiervorrichtung im zweiten Betriebszustand,
- Fig. 2: eine Schnittansicht einer bevorzugten Ausführungsform der Aufnahmeeinheit,
- Fig. 3: eine Schnittansicht einer bevorzugten Ausführungsform des Verschlusselementes, des Stützelementes und des Adapterelementes und
- Fig. 4: eine perspektivische Ansicht einer bevorzugten Ausführungsform des Adapterelementes und des Stützelementes.

Figur 1 a) zeigt eine erste bevorzugte Ausführungsform der erfindungsgemäßen Dosiervorrichtung. Es ist erfindungsgemäß eine Aufnahmeeinheit 3 vorgesehen, welche einen Durchtrittskanal 31 und eine Anschlagsgeometrie 32 aufweist. Bevorzugt an der Außenseite der Aufnahmeeinheit 3 ist ein Rückstellelement 53 vorgesehen, welches sich an einer dafür vorgesehenen Stufe an der Außenfläche der Aufnahmeeinheit 3 abstützt. Das Rückstellelement 53 stützt sich mit seinem zweiten Ende, in der Figur nach unten weisend, an einem Stützelement 52 ab. Das Stützelement 52 besitzt bevorzugt zwei Bereiche: Einen ersten, in der Figur unteren Bereich, in welchem es die Aufnahmeeinheit 3 quer zur Haupterstreckungsrichtung H überragt und an das Rückstellelement 53 grenzt bzw. von diesem mit einer Kraft F beaufschlagt wird, und einen zweiten Bereich, welcher durch den Durchtrittskanal 31 hindurch bis zum Verschlusselement 51 reicht. Bei der in der Figur gezeigten bevorzugten Ausführungsform ist das Stützelement 52 fest mit dem Verschlusselement 51 verbunden, wobei die vom Rückstellelement 53 auf das Stützelement 52 übertragene Rückstellkraft bzw. Vorspannkraft F in Haupterstreckungsrichtung H an das Verschlusselement 51 übertragen wird und dieses gegen die Anschlaggeometrie 32 presst. Auf diese Weise wird der Durchtrittskanal 31 vom Verschlusselement 51 versperrt, d.h. die Dosiervorrichtung befindet sich in ihrem ersten Betriebszustand. Wie in der Figur gezeigt, ist an der Oberseite der Aufnahmeeinheit 3 der Aufnahmebereich 33 vorgesehen, an welchem wiederum ein nicht in der Figur gezeigter Vorratsbehälter angrenzt bzw. fest mit dem Aufnahmebereich 33 verbunden ist. In einer bevorzugten Ausführungsform ist das Rückstellelement 53 als Spiralfeder ausgeführt. Weiterhin kann das Rückstellelement 53 bevorzugt auch eine Hülse aus gummiartigem, elastisch verformbarem Material sein. Das Verschlusselement 51, das Stützelement 52 und das Rückstellelement 53 bilden gemeinsam die Verschlusseinheit 5.

Figur 1 b) zeigt die in Figur 1 a) gezeigte Ausführungsform der bevorzugten Dosiervorrichtung in ihrem zweiten Betriebszustand. Dabei ist im Vergleich zur Anordnung in Figur 1a das Stützelement 52 und das Verschlusselement 51 relativ zur Aufnahmeeinheit 3 verlagert worden, wobei sich zwischen der Unterkante des Verschlusselementes 51 und der Anschlaggeometrie 32 ein Spalt gebildet hat. Der Durchtrittskanal 31 ist in diesem Betriebszustand also freigegeben, d.h. Dentalreinigungspulver kann von - in der Figur - oben kommend, am Verschlusselement 51 vorbei, durch den zwischen Verschlusselement 51 und Anschlaggeometrie 32 gebildeten Kanal weiter bis zu den Öffnungen an der Unterseite des Stützelementes 52 gelangen, um von da aus in den zu befüllenden Behälter zu rieseln. Weiterhin in der Figur gut zu erkennen ist, dass das Stützelement 52 das Rückstellelement 53 um die Weglänge zusammenstaucht, die es gemeinsam mit dem Verschlusselement 51 relativ zur Aufnahmeeinheit 3 zurücklegt. Um diese Zusammenstauchung des Rückstellelementes 53 bzw. die elastische Verformung des Rückstellelementes 53 zu erreichen, muss am Stützelement 52 eine Kraft angelegt werden. Sobald diese Kraft nicht mehr am Stützelement 52 anliegt drückt das Rückstellelement 53 das Stützelement 52 wieder in die in Figur 1a gezeigte Position zurück, das Verschlusselement 51 liegt wieder an der Anschlaggeometrie an 32, der Durchtrittskanal ist versperrt und es ist somit der erste Betriebszustand der Dosiervorrichtung wieder hergestellt.

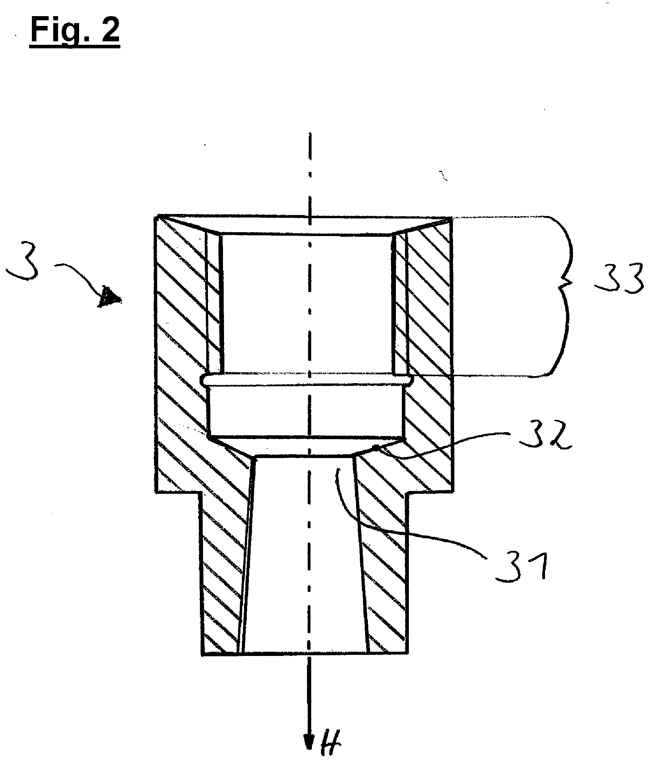

In Fig. 2 ist eine bevorzugte Ausführungsform der Aufnahmeeinheit 3 gezeigt. So ist die Aufnahmeeinheit 3 bevorzugt eine rotationssymmetrische ausgebildete Hülse mit einer Reihe von Querschnittsverengungen und -erweiterungen sowohl an ihrer Innen- als auch Außenseite. Darüber hinaus weist die Aufnahmeeinheit 3 an ihrer Oberseite einen Aufnahmebereich 33 auf, wobei dieser Aufnahmebereich 33 dadurch gekennzeichnet ist, dass geeignete Mittel zur Aufnahme und zum Festlegen des an die Dosiervorrichtung anzuschließenden Vorratsbehälters vorgesehen sind. Bevorzugt ist, wie in der Figur gezeigt, zum Beispiel ein Innengewinde in den Aufnahmebereich 33 eingebracht, in welchen der Vorratsbehälter hineingeschraubt werden kann. Weiterhin verfügt die Aufnahmeeinheit 3 über eine Anschlaggeometrie 32, die bevorzugt eine trichterförmige Geometrie aufweist, und sowohl dem Zwecke dient, eine geeignete Kontaktfläche für das Verschlusselement 51 bereit zustellen, als auch im zweiten Betriebszustand der Dosiervorrichtung eine günstige Weiterleitung des Dentalreinigungspulvers bis hin zu den unteren Bereichen des Durchtrittskanals der Aufnahmevorrichtung zu ermöglichen. In der unteren Hälfte der Aufnahmeeinheit 3 ist an ihrer Außenseite bevorzugt ein Absatz vorgesehen, welcher bevorzugt dafür dient, eine geeignete Anlagefläche für das Rückstellelement 53 bereitzustellen. Da die Vorspannkraft des Rückstellelementes 53 im Wesentlichen längs der Haupterstreckungsrichtung H wirken soll, ist es vorteilhaft, dass die Stufe dieser Anlagefläche quer zur Haupterstreckungsrichtung H ausgerichtet ist. In einer weiteren bevorzugten Ausführungsform kann im Aufnahmebereich 33 sowohl ein Außengewinde als auch ein Innengewinde vorgesehen sein, wobei es möglich ist, Vorratsbehälter mit verschiedenen Anschlussgeometrien aufzunehmen bzw. fest mit der Dosiervorrichtung zu verbinden.

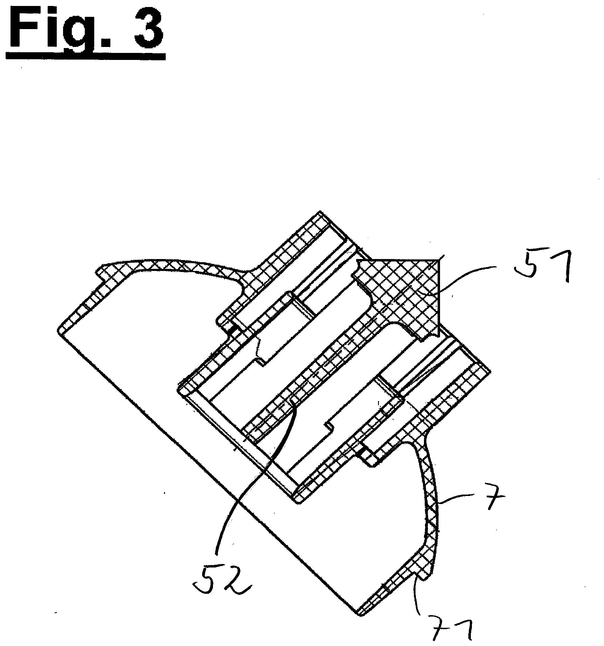

In Fig. 3 ist eine bevorzugte Ausführungsform des Stützelementes 52, des Verschlusselements 51 und des Adapterelementes 7 gezeigt. Dabei sind das Stützelement 52 und das Adapterelement 7 einstückig ausgeführt. Es kann in weiteren Varianten auch bevorzugt sein, dass das Stützelement 52 und das Adapterelement 7 mittels einer stoffschlüssigen Verbindung, zum Beispiel einer Klebe- oder Schweißverbindung miteinander verbunden sind. Ferner bevorzugt kann sowohl am Stützelement 52 als auch am Adapterelement 7 ein Gewinde vorgesehen sein, mittels welchem beide zusammengeschraubt werden können. Bevorzugt ist, wie in der Figur gezeigt, am Adapterelement 7 ein Auflageabsatz 71 vorgesehen, welcher beim Aufsetzen des Adapterelementes 7 auf den zu befüllenden Behälter an dessen Oberkante aufsitzt. Dabei wird der Bereich des Adapterelementes 7 mit geringerem Durchmesser - in der Figur nach unten links weisend - so weit in den zu befüllenden Behälter eingeführt, bis der Auflageabsatz 71 auf der Oberkante des zu befüllenden Behälters zum Aufliegen kommt. Auf diese Weise kann das Adapterelement 7 bzw. die gesamte Dosiervorrichtung gegen Verlagerung seitlich zum zu befüllenden Behälter gesichert werden und gleichzeitig eine genaue Eintauchtiefe des Adapterelementes 7 in den zu befüllenden Behälter eingestellt werden. Bevorzugt ist das Maß, mit welchem das Stützelement 52 mit seiner Unterkante, also der vom Verschlusselement 51 weg weisenden Kante, in das Adapterelement 7 hineinragt, so gewählt, dass die Unterkante des Stützelementes 52 unterhalb des Auflageabsatzes 71 liegt. Der Vorteil dieses Merkmals ist, dass der Befüllvorgang des zu befüllenden Behälters nur solange stattfindet, bis der im zu befüllenden Behälter aufgehäufte Berg von Dentalreinigungspulver die Unterkante des Stützelementes 52 erreicht. Da die Position des Auflageabsatzes 71 bevorzugt gleich der Position der Oberkante des zu befüllenden Behälters ist und die Position der Unterkante des Stützelementes 52 bevorzugt gleich der maximal einzustellenden Befüllhöhe im zu befüllenden Behälter ist, kann mit der Positionierung der Unterkante des Stützelementes 52 relativ zum Auflageabsatz 71 bereits vorab eine genaue Dosierung des Befüllungsvorgangs eingestellt werden. Für den bevorzugten Fall, dass das Stützelement 52 und das Adapterelement 7 mittels eines Schraubgewindes relativ zueinander verlagerbar und somit die relative Position der Unterkante des Stützelementes 52 zum Auflageabsatz 71 variabel einstellbar sind, kann der Anwender vor jedem Befüllvorgang, bevorzugt unterstützt durch an der Außenseite des Adapterelementes 7 bzw. des Stützelementes 52 angebrachte Markierungen, eine bestimmte, im zu befüllenden Behälter zu erreichende Füllhöhe einstellen und muss diese während des weiteren Befüllvorgangs nicht permanent kontrollieren. Befindet sich die Unterkante des Stützelements 52 zu weit oberhalb des Auflageabsatzes 71 am Adapterelement 7, so besteht die Gefahr, dass der aufgeschüttete Berg die Oberkante des zu befüllenden Behälter überragt und nach Abnahme des Adapterelementes 7 vom zu befüllenden Behälter über die Behälterkanten schwappt. Es ist an dieser Stelle auch zu beachten, dass neben dem bereits im zu befüllenden Behälter befindlichen Material bei Abnahme des Adapterelementes 7 auch jenes Material in den zu befüllenden Behälter hineinfällt, welches sich im Durchtrittskanal 31 bis auf Höhe des Verschlusselementes 51 staut. Wird das Adapterelement 7 vom Behälter abgehoben, so wird gleichzeitig auch die Kraft aufgehoben, die vom Adapterelement 7 an das Stützelement 52 bzw. das Rückstellelement 53 übertragen, das Verschlusselement 51 im zweiten Betriebszustand der Dosiervorrichtung hält. In der Folge wird die Vorspannkraft des Rückstellelementes 53 das Stützelement 52 und das Verschlusselement 51 wieder in den ersten Betriebszustand der Dosiervorrichtung pressen, sodass kein weiteres Dentalreinigungspulver aus dem Vorratsbehälter in den Durchtrittskanal 31 bzw. in den zu befüllenden Behälter gelangen kann. Bevorzugt ist also eine zweite wichtige Funktion des Auflageabsatzes 71 die Übertragung der Kraft, die der Anwender auf den zu befüllenden Behälter aufbringt und die an das Adapterelement 7, weiter an das Stützelement 52 und schließlich an das Rückstellelement 53 weitergeleitet wird. In der Figur ist darüber hinaus ein bevorzugtes Merkmal des Verschlusselementes 51 gezeigt, wobei dieses an seiner Oberseite, in der Figur nach rechts oben weisend, eine kegelförmige Geometrie aufweist. Diese Geometrie des Verschlusselementes 51 unterstützt das Vorbeigleiten des Dentalreinigungspulvers am Verschlusselement 51 während des Befüllvorgangs. Weiterhin bevorzugt kann auch eine halbkugelförmige oder pyramidenförmige Ausgestaltung der zum Vorratsbehälter weisenden Oberseite des Verschlusselementes 51 sein.

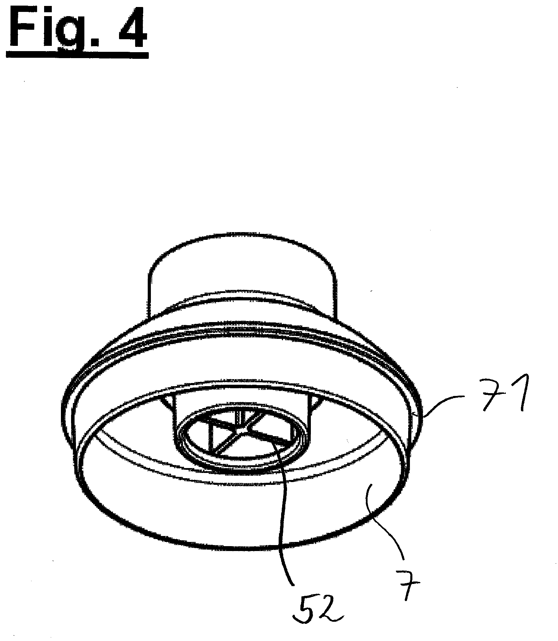

In Figur 4 ist eine bevorzugte Ausführungsform des Stützelementes 52 und des Adapterelementes 7 gezeigt. Dabei ist besonders die stegartige Ausbildung des Stützelementes 52 zu erkennen. Weiterhin deutlich wird die Querschnittserweiterung vom Durchmesser des Stützelementes 52 bis hin zum wesentlich größeren Durchmesser des Adapterelementes 7, an dessen Unterkante in der Figur unten gezeigt.

### Bezugszeichenliste

3 - Aufnahmeeinheit
5 - Verschlusseinheit
7 - Adapterelement
31 - Durchtrittskanal
32 - Anschlaggeometrie
33 - Aufnahmebereich
51 - Verschlusselement
52 - Stützelement
53 - Rückstellelement
71 - Auflageabsatz
H - Haupterstreckungsrichtung des Durchtrittskanals
F - Kraft

## Patentansprüche

1. Dosiervorrichtung für Dentalreinigungspulver, umfassend eine Aufnahmeeinheit (3), eine Verschlusseinheit (5) und ein Adapterelement (7), wobei die Aufnahmeeinheit (3) einen Durchtrittskanal (31) mit einer Anschlaggeometrie (32) aufweist,
wobei die Verschlusseinheit (5) ein Verschlusselement (51) aufweist, welches verlagerbar im und/oder zum Durchtrittskanal (31) angeordnet ist,
wobei in einem ersten Betriebszustand das Verschlusselement (51) mittels einer Vorspannung gegen die Anschlaggeometrie (32) gepresst ist und auf diese Weise der Durchtrittskanal (31) verschlossen ist,
wobei über Anlegen einer Kraft (F), die größer als die Vorspannung und dieser entgegengerichtet ist, das Verschlusselement (51) in einen zweiten Betriebszustand bringbar ist,
wobei der zweite Betriebszustand durch das Abheben des Verschlusselements (51) von der Anschlaggeometrie (32) und die damit folgende Freigabe des Durchtrittskanals (31) gekennzeichnet ist,
wobei die Anschlaggeometrie (32) eine Querschnittsverengung des Durchtrittskanals (31) ist, wobei die Verschlusseinheit (5) ein Stützelement (52) umfasst,
wobei das Verschlusselement (51) an dem Stützelement (52) festgelegt oder festlegbar ist, und
wobei das Stützelement (52) relativ zur Aufnahmeeinheit (3) verlagerbar ist, wobei das Adapterelement (7) mit einem ersten Ende an dem Stützelement (52) festgelegt oder festlegbar ist,
wobei das erste Ende des Adapterelements (7) eine mit der Außengeometrie des Stützelements (52) kongruierende Geometrie aufweist, und
wobei ein, dem ersten Ende entlang einer Haupterstreckungsrichtung (H) des Durchtrittskanals (31) gegenüber liegendes, zweites Ende eine Geometrie, kongruent zur Geometrie eines an das Adapterelement (7) anzulagernden Behälters aufweist.

2. Dosiervorrichtung nach Anspruch 1,
wobei die Verschlusseinheit (5) ein Rückstellelement (53) aufweist,
wobei sich das Rückstellelement (53) an der Aufnahmeeinheit (3) und dem Stützelement (52) unter Vorspannung abstützt,
wobei die aus der Vorspannung resultierende Kraft von dem Stützelement (52) auf das Verschlusselement (51) übertragen wird, und
wobei die Vorspannung entlang der Haupterstreckungsrichtung (H) des Durchtrittskanals (31) gerichtet ist.

3. Dosiervorrichtung nach Anspruch 2,
wobei durch Anlegen einer Kraft an das Stützelement (52), die größer als die Vorspannkraft des Rückstellelements (53) und dieser entgegengerichtet ist, der zweite Betriebszustand der Dosiervorrichtung einstellbar ist, indem das Stützelement (52) und das Verschlusselement (51) entlang der Haupterstreckungsrichtung (H) verlagert werden.

4. Dosiervorrichtung nach Anspruch 3,
wobei vom ersten Betriebszustand ausgehend zum Erreichen des zweiten Betriebszustandes das Stützelement (52) und das Verschlusselement (51) um 1mm bis 20mm, bevorzugt 2mm bis 10mm und besonders bevorzugt 4mm bis 6mm relativ zur Aufnahmeeinheit (3) verlagert werden.

5. Dosiervorrichtung nach einem der vorhergehenden Ansprüche,
wobei das Verschlusselement (51) an der Kontaktfläche zur Anschlaggeometrie (32) ein Dichtungselement aufweist.

6. Dosiervorrichtung nach einem der vorhergehenden Ansprüche,
wobei die Aufnahmeeinheit (3) einen Aufnahmebereich (33) aufweist,
wobei im Aufnahmebereich (33) ein Innen- und/oder Außengewinde vorgesehen ist.

7. Dosiervorrichtung nach Anspruch 1,
wobei das Adapterelement (7) einen Auflageabsatz (71), zum Anordnen des Adapterelementes (7) an einem zu befüllenden Behälter, aufweist, und wobei das Stützelement (52) in das Adapterelement (7) hinein ragt und/oder, in Haupterstreckungsrichtung (H), über den Auflageabsatz (71) hinaus ragt.

8. Dosiervorrichtung nach einem der Ansprüche 1 oder 7,
wobei die Aufnahmeeinheit (3), das Verschlusselement (51), das Stützelement (52) und das Adapterelement (7) zumindest bereichsweise rotationssymmetrisch um die Haupterstreckungsrichtung (H) ausgebildet sind.

9. Dosiervorrichtung nach einem der Ansprüche 1 bis 7,
wobei das Stützelement (52) in einem Bereich mit Erstreckung im Wesentlichen längs der Haupterstreckungsrichtung (H) einen stegartig ausgebildeten Querschnitt aufweist.

## Claims

1. A metering device for dental cleaning powder, comprising a receiving unit (3), a closure unit (5) and an adapter element (7), the receiving unit (3) comprising a passage channel (31) having a stop geometry (32),
the closure unit (5) comprising a closure element (51) which is displaceably arranged in and/or with respect to the passage channel (31), the closure element (51) being pressed against the stop geometry (32) by means of a bias in a first operating state, the passage channel (31) thereby being closed,
wherein the closure element (51) can be brought into a second operating state by applying a force (F) which is greater than and opposite to the bias,
the second operating state being specified by removing the closure element (51) from the stop geometry (32) and as a result unblocking the passage channel (31), the stop geometry (32) being a cross-sectional restriction of the passage channel (31), the closure unit (5) comprising a support element (52),
the closure member (51) being fixed or attachable to the support member (52), and
the supporting element (52) being displaceable in relation to the receiving unit (3), wherein the adapter element (7) is fixed or is able to be fixed with a first end to the support element (52),
the first end of the adapter element (7) having a geometry congruent to the external geometry of the support element (52), and
wherein a second end opposite the first end along a main extension direction (H) of the passage channel (31) has a geometry congruent to the geometry of a container to be supported on the adapter element (7).

2. The metering device according to claim 1,
the closure unit (5) having a restoring element (53),
the restoring element (53) being supported on the receiving unit (3) and the supporting element (52) while being under bias,
wherein the force resulting from the bias is transmitted from the support element (52) to the closure member (51); and
wherein the bias is directed along the main extension direction (H) of the passage channel (31).

3. The metering device according to claim 2,
wherein by applying a force greater than and opposite to the biasing force of the restoring member (53) to the support member (52), the second operating state of the metering device is adjustable by displacing the support member (52) and the closure member (51) along the main extension direction (H).

4. The metering device according to claim 3,
the support element (52) and the closure element (51) being displaced by 1 mm to 20 mm, preferably 2 mm to 10 mm and particularly preferably 4 mm to 6 mm in relation to the receiving unit (3) starting from the first operating state in order to reach the second operating state.

5. The metering device according to one of the preceding claims, wherein the closure element (51) comprises a sealing element on the contact surface to the stop geometry (32).

6. The metering device according to one of the preceding claims,
wherein the receiving unit (3) comprises a receiving area (33), an internal and/or external thread being provided in the receiving area (33).

7. The metering device according to claim 1,
wherein the adapter element (7) comprises a support shoulder (71) for arranging the adapter element (7) on a container to be filled, and the support element (52) projects into the adapter element (7) and/or beyond the support shoulder (71) in the main extension direction (H).

8. The metering device according to one of the claims 1 or 7,
wherein the receiving unit (3), the closure element (51), the support element (52) and the adapter element (7) are formed rotationally symmetrical about the main direction of extension (H) at least in certain areas.

9. The metering device according one of the claims 1 to 7,
wherein the support member (52) has a web-like cross-section in a area extending substantially along the main direction of extension (H).

## Revendications

1. Dispositif de dosage pour une poudre de nettoyage dentaire, comportant une unité de réception (3), une unité d'obturation (5) et un élément adaptateur (7), dans lequel
l'unité de réception (3) comprend un canal de passage (31) présentant une géométrie de butée (32),
l'unité d'obturation (5) comprend un élément obturateur (51) qui est agencé de façon mobile dans et/ou par rapport au canal de passage (31),
dans un premier état de fonctionnement, l'élément obturateur (51) est pressé contre la géométrie de butée (32) par une précontrainte et de cette manière le canal de passage (31) est obturé,
par application d'une force (F) qui est supérieure à la précontrainte et qui est dirigée en sens opposé à celle-ci, l'élément obturateur (51) est susceptible d'être amené dans un second état de fonctionnement,
le second état de fonctionnement est **caractérisé par** le soulèvement de l'élément obturateur (51) vis-à-vis de la géométrie de butée (32) et par la libération qui s'en suit du canal de passage (31),
la géométrie de butée (32) est un rétrécissement de la section transversale du canal de passage (31),
l'unité d'obturation (5) comprend un élément de soutien (52),
l'élément obturateur (51) est immobilisé ou susceptible d'être immobilisé sur l'élément de soutien (52), et
l'élément de soutien (52) est mobile par rapport à l'unité de réception (3),
l'élément adaptateur (7) est immobilisé ou susceptible d'être immobilisé sur l'élément de soutien (52) par une première extrémité,
la première extrémité de l'élément adaptateur (7) présente une géométrie congruente à la géométrie extérieure de l'élément de soutien (52), et
une seconde extrémité opposée à la première extrémité le long d'une direction d'extension principale (H) du canal de passage (31) présente une géométrie congruente à la géométrie d'un récipient à monter sur l'élément adaptateur (7).

2. Dispositif de dosage selon la revendication 1,
dans lequel
l'unité d'obturation (5) comprend un élément de rappel (53),
l'élément de rappel (53) prend appui sous précontrainte contre l'unité de réception (3) et contre l'élément de soutien (52),
la force résultante de la précontrainte est transmise de l'élément de soutien (52) à l'élément obturateur (51), et
la précontrainte est dirigée le long de la direction d'extension principale (H) du canal de passage (31).

3. Dispositif de dosage selon la revendication 2,
dans lequel
par application d'une force à l'élément de soutien (52), qui est supérieure à la force de précontrainte de l'élément de rappel (53) et qui est dirigée en sens opposé à celle-ci, le second état de fonctionnement du dispositif de dosage peut être établi par déplacement de l'élément de soutien (52) et de l'élément obturateur (51) le long de la direction d'extension principale (H).

4. Dispositif de dosage selon la revendication 3,
dans lequel
à partir du premier état de fonctionnement, afin d'atteindre le second état de fonctionnement, l'élément de soutien (52) et l'élément obturateur (51) sont déplacés de 1 mm à 20 mm, de préférence de 2 mm à 10 mm et de manière particulièrement préférée de 4 mm à 6 mm par rapport à l'unité de réception (3).

5. Dispositif de dosage selon l'une des revendications précédentes,
dans lequel
l'élément obturateur (51) présente un élément d'étanchéité sur la surface de contact vers la géométrie de butée (32).

6. Dispositif de dosage selon l'une des revendications précédentes,
dans lequel
l'unité de réception (3) comprend une zone de réception (33),
dans la zone de réception (33) est prévu un taraudage et/ou un filetage.

7. Dispositif de dosage selon la revendication 1,
dans lequel
l'élément adaptateur (7) comprend un talon d'appui (71) pour agencer l'élément adaptateur (7) sur un récipient à remplir, et
l'élément de soutien (52) pénètre dans l'élément adaptateur (7) et/ou dépasse au-delà du talon d'appui (71) en direction d'extension principale (H).

8. Dispositif de dosage selon l'une des revendications 1 ou 7,
dans lequel
l'unité de réception (3), l'élément obturateur (51), l'élément de soutien (52) et l'élément adaptateur (7) sont réalisés au moins localement à symétrie de révolution autour de la direction d'extension principale (H).

9. Dispositif de dosage selon l'une des revendications 1 à 7,
dans lequel
l'élément de soutien (52) présente une section transversale réalisée sensiblement en forme barrette dans une zone ayant une extension sensiblement le long de la direction d'extension principale (H).
